# EUROPÄISCHE PATENTSCHRIFT

(11) **EP 2 962 545 B1**
(45) Veröffentlichungstag und Bekanntmachung des Hinweises auf die Patenterteilung: **06.03.2019**
(21) Anmeldenummer: 15174640.1
(22) Anmeldetag: 30.06.2015
(51) Int. Cl.: A01F 15/18

(54) **LANDWIRTSCHAFTLICHE RUNDBALLENPRESSE MIT EINER BALLENPRESSROLLE**
AGRICULTURAL ROUND BALER WITH A BALE PRESS ROLLER
PRESSE À BALLES RONDES AGRICOLE AVEC ROULEAU DE PRESSE À BALLES

(30) Priorität: 01.07.2014 DE 102014212713
(43) Veröffentlichungstag der Anmeldung: 06.01.2016
(73) Patentinhaber: Deere & Company, Moline, IL 61265 (US)
(72) Erfinder: Dutertre, Matthieu, 25320 Chemaudin (FR); Gresset, Pascal, 25870 Auxon Dessous (FR)
(74) Vertreter: Reichert, Christian

(56) Entgegenhaltungen:
- EP-A1- 0 404 100
- EP-A1- 2 387 874
- DE-A1- 2 656 896
- US-A- 4 163 419
- US-A1- 2008 184 691

## Beschreibung

Die Erfindung betrifft eine landwirtschaftliche Rundballenpresse mit Ballenpressrollen umfassend einen Rollenkörper mit einer Mantelfläche, die den Umfang und die Länge des Rollenkörpers umschließt, und mehreren sich radial erstreckende Erhebungen, die auf der Mantelfläche über den Umfang und die Länge des Rollenkörpers angeordnet sind.

Landwirtschaftliche Rundballenpressen sind bekannt. Dabei wird in Rundballenpressen landwirtschaftliches Erntegut, beispielsweise Stroh, Gras oder Getreide zu einem Rundballen geformt und mit einem Umwicklungsmaterial, beispielsweise Netz, Folie oder Bindegarn, umwickelt. Derartige Rundballenpressen weisen eine Aufnahme- und Zuführeinrichtung für das zu pressende Erntegut auf, durch welche das Erntegut in eine Zuführöffnung einer Ballenpresskammer eingeführt wird. Die Ballenpresskammer umfasst mehrere in einem Kreis angeordnete Ballenpressrollen, die sich über die Breite der Ballenpresskammer zwischen zwei Seitenwänden erstrecken und rotatorisch angetrieben sind. Zur besseren Mitnahme bzw. besseren Beförderung des in die Presskammer eingeführten Ernteguts sind die Ballenpressrollen mit mehreren über den Umfang der Ballenpressrollen verteilte Erhebungen versehen, die sich in radialer Richtung der Ballenpressrolle in gleichmäßiger Stärke und über die Länge der Ballenpressrolle erstecken. Oftmals kommt es jedoch in dieser Anordnung und Ausgestaltung von Ballenpressrollen, insbesondere bei trockenen Erntebedingungen und bei kurz geschnittenem Erntegut, zu Anhäufungen von Erntegut an den Seitenbereichen des Rundballens bzw. nahe der Seitenwände der Ballenpresskammer. Die Form des Rundballens kann dann von der gewünschten Form eines Rotationszylinders abweichen, so dass sich die Form des Rundballens in Richtung eines Rotationshyperboloiden entwickelt (die Mantelfläche des Rundballens ist in Richtung der Rotationsachse des Rundballens abweichend von einer Geraden nach innen gewölbt). Dies wiederum kann zu Problemen bei einer anschließenden Netzzufuhr führen, so dass sich das Netz nicht ordnungsgemäß um die Seitenkanten an den Stirnflächen des fertig gepressten Rundballens legen kann, oder erst gar nicht durch den Rundballen mitgenommen wird.

Die US 2008/0184691 A1 offenbart eine Rundballenpresse mit Ballenpressrollen der eingangs genannten Art. Die dort offenbarten Ballenpressrollen umfassen sich radial erstreckende Erhebungen, oder Rippen, die auf der Außenfläche der Ballenpressrolle in Axialrichtung entlang der Rotationsachse angeordnet sind. Die Erhebungen sind mit einer in Rotationsrichtung der Ballenpressrolle steileren Angriffsfläche ausgebildet als entgegen der Rotationsrichtung. Die vorgenannten Probleme werden dadurch jedoch nicht überwunden.

Die der Erfindung zugrunde liegende Aufgabe wird darin gesehen, eine Ballenpressrolle der eingangs genannten Art anzugeben, durch welches die vorgenannten Probleme überwunden werden.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Erfindungsgemäß weist eine Ballenpressrolle der eingangs genannten Art Erhebungen auf der Mantelfläche auf, die an stirnflächenseitigen Endbereichen des Rollenkörpers eine größere radiale Erstreckung aufweisen als in einem zwischen den Endbereichen liegender Bereich des Rollenkörpers. Durch die unterschiedlich stark ausgeprägten Erhebungen entlang der Länge des Rollenkörpers bzw. durch die stärker an den Endbereichen des Rollenkörpers ausgeprägten Erhebungen werden an den Endbereichen der Ballenpressrollen stärkere Presskräfte auf den Rundballen ausgeübt als in dem zwischen den Endbereichen liegenden Bereich. Dadurch kann eine sich einstellende Unförmigkeit vermieden bzw. einer von einer zylindrischen Form abweichenden Form des Rundballens effektiv entgegengewirkt werden. In Folge dessen können die zuvor genannten Fehler bzw. Probleme bei der Netzbindung vermieden oder zumindest minimiert werden.

Die Erhebungen auf der Mantelfläche des Rollenkörpers können durch streifenförmige Bänder ausgebildet sein. Dabei kann es sich beispielsweise um Stahl- bzw. Blechstreifen handeln die in Längsrichtung oder auch spiralförmig entlang der Länge des Rollenkörpers aufgeschweißt sind. Es ist ebenfalls denkbar, die Erhebungen direkt in das Mantelflächenmaterial durch beispielsweise ein Blechumformverfahren auszubilden. Ebenfalls ist es denkbar die Erhebungen durch aneinander gereihte Noppen auszubilden, ebenfalls aufgeschweißt oder durch geeignete Blechumformung.

Die Bänder weisen an den seitlichen Endbereichen des Rollenkörpers eine größere Dicke auf als in dem zwischen den Endbereichen liegenden Bereich des Rollenkörpers. Dabei können einteilige Bänder mit einem über die Länge des Rollenkörpers unterschiedlichen Dickenverlauf eingesetzt werden, deren Bereiche, die sich in die Endbereiche erstrecken mit einer stärkeren Dicke ausgebildet sind. Alternativ können Bänder unterschiedlicher Dicke und Länge verwendet werden, wobei kürzere, nur die Endbereiche des Rollenkörpers abdeckende Bänder mit stärkerer Dicke in Umfangsrichtung neben längeren Bändern mit geringerer Dicke angeordnet werden. Letztere können sich dann auch einseitig oder beidseitig bis in die Endbereiche erstrecken, was fertigungstechnische Vorteile bieten kann, beispielsweise zum Nachrüsten bereits vorhandener Ballenpressrollen, die mit Bändern mit gleichmäßigem Dickenverlauf ausgerüstet sind.

Ferner können die Bänder an den seitlichen Endbereichen des Rollenkörpers übereinander liegend ausgebildet sein, so dass die stärkere Dicke in den Endbereichen beispielsweise durch eine Doppellage von Bändern ausgebildet wird, wobei ein kurzes, einen Endbereich des Rollenkörpers abdeckendes Band, auf das Ende eines in den jeweiligen Endbereich ragendes langes Band aufgebracht bzw. aufgeschweißt wird. Auch diese Variante eignet sich zum Nachrüsten von bereits vorhandenen Pressrollen mit Bändern mit gleichmäßigem Dickenverlauf, wie sie im Stand der Technik verwendet werden.

Die oben beschriebenen Ballenpressrollen eignen sich insbesondere für den Einsatz in landwirtschaftlichen Rundballenpressen mit konstanter Presskammer.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: eine schematische Seitenansicht einer landwirtschaftlichen Rundballenpresse mit Ballenpressrollen,
- Fig. 2: eine schematische perspektivische Seitenansicht einer Ballenpressrolle gemäß Figur 1 in einer ersten Ausführungsform,
- Fig. 3: eine schematische Seitenansicht der Ballenpressrolle aus Figur 2,
- Fig. 4: eine schematische perspektivische Seitenansicht einer Ballenpressrolle gemäß Figur 1 in einer weiteren Ausführungsform,
- Fig. 5: eine schematische Seitenansicht der Ballenpressrolle aus Figur 4,
- Fig. 6: eine schematische perspektivische Seitenansicht einer Ballenpressrolle gemäß Figur 1 in weiteren Ausführungsform und
- Fig. 7: eine schematische Seitenansicht der Ballenpressrolle aus Figur 6.

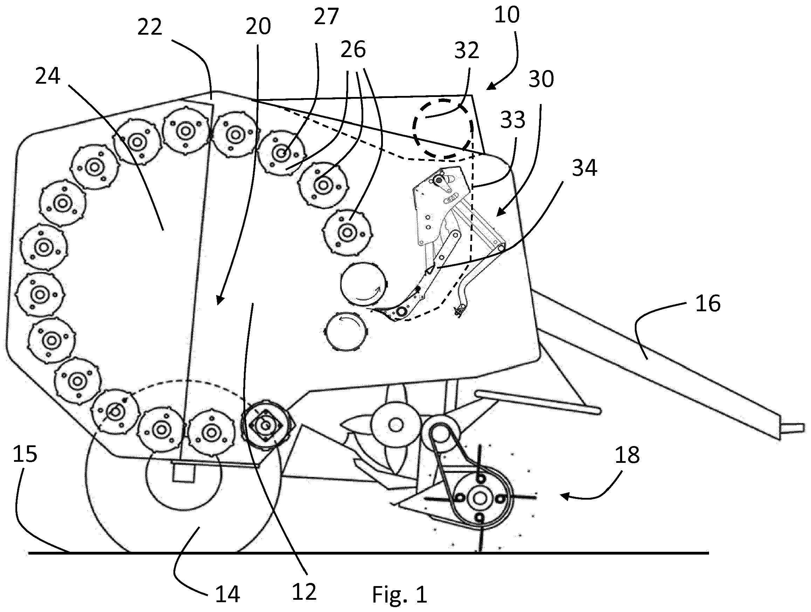

Eine in der Figur 1 schematisch dargestellte Rundballenpresse 10 umfasst einen ersten Gehäuseteil 12, der sich mittels Rädern 14 auf einem Boden 15 abstützt und mittels einer Deichsel 16 an ein nicht gezeigtes Zugfahrzeug, z. B. einen Ackerschlepper, anschließbar ist.

An einer in Vorwärtsfahrtrichtung vorderen unteren Seite des ersten Gehäuseteils 12 befindet sich in bekannter Weise eine Aufnahme- und Zuführeinrichtung 18 für Erntegut, wobei der erste Gehäuseteil 12 einen vorderen Teil eines Ballenpressraums 20 umgibt. An dem rückwärtigen oberen Eckbereich des ersten Gehäuseteils 12 befindet sich ein Lager 22 für ein schwenkbares zweites Gehäuseteil 24, das einen hinteren Teil des Ballenpressraums 20 umgibt. Das zweite Gehäuseteil 24 gibt im geöffneten Zustand (nicht gezeigt) einen Auslass (nicht gezeigt) frei, durch welchen ein von der Rundballenpresse 10 gepresster Ballen (nicht gezeigt) abgesetzt bzw. entladen oder ausgeworfen werden kann. Das schwenkbare zweite Gehäuseteil 24 kann mittels Stellmotoren (nicht gezeigt) betätigt werden (geöffnet und geschlossen werden) und stellt somit eine Auslassklappe für einen im Ballenpressraum 20 gepressten Ballen dar.

Die Rundballenpresse 10, mit größenunveränderlichem Ballenpressraum 20 ausgebildet, enthält eine Vielzahl zueinander parallel verlaufender Presselemente zum Pressen von Erntegut in Form von Ballenpressrollen 26 (exemplarisch wurden hier nur einige wenige Ballenpressrollen 26 mit dem Bezugszeichen "26" versehen), deren Rotationsachsen 27 bei geschlossenem zweiten Gehäuseteil 24 auf einem Kreisbogen gelegen sind, und von denen wenigstens einige angetrieben sind.

Ferner umfasst die Rundballenpresse 10 eine Ballenwickeleinrichtung 30, die mit Vorratsrolle 32 für Umwicklungsmaterial 33 bestückt ist. Als Umwicklungsmaterial kann vorzugsweise ein Netz oder auch Folie eingesetzt werden. Die Ballenwickeleinrichtung 30 umfasst eine Zuführeinrichtung 34 für das Umwicklungsmaterial 33, mittels welcher das Umwicklungsmaterial 33 von der Vorratsrolle 32 in den Ballenpressraum 20 geführt wird.

Nachdem der eigentliche Pressvorgang, also die Erntegutaufnahme und Bildung eines Rundballens durch die Pressrollen 26, abgeschlossen ist, wird eine Fahrt über den Boden 15 unterbrochen, da die Rundballenpresse 10 mit dem Rundballen gefüllt ist und kein weiteres Erntegut mehr in den Ballenpressraum 20 aufgenommen werden soll bzw. kann. Zu dieser Zeit wird auch die Ballenwickeleinrichtung 30 aktiviert, und ein sich dem Pressvorgang anschließender Umwicklungsvorgang eingeleitet. Dabei wird durch eine anhaltende Drehung des sich im Ballenpressraum 20 befindlichen Rundballens das Umwicklungsmaterial 33 um den Rundballen 20 gewickelt. Nachdem ein Umwicklungsvorgang abgeschlossen ist wird der Rundballen durch Öffnen der Auslassklappe (zweiter Gehäuseteil 24) über einer Entladerampe (nicht gezeigt) auf dem Boden 15 abgelassen. Sodann wird die Fahrt mit der Rundballenpresse 10 wieder aufgenommen und ein neuer Pressvorgang beginnt.

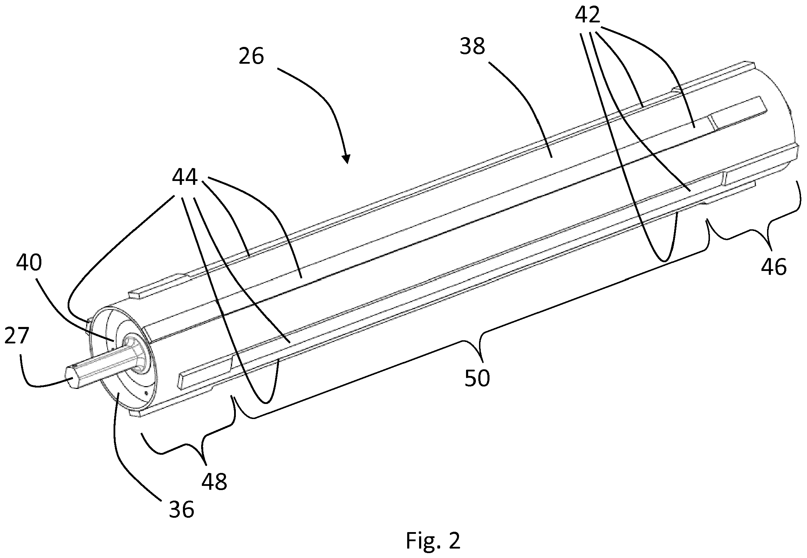

Die Ballenpressrollen 26 sind in mehreren Ausführungsbeispielen in jeweils zwei Ansichten in den Figuren 2 bis 7 dargestellt, wobei die Figuren 2 und 3, 4 und 5 sowie 6 und 7 jeweils ein Ausführungsbeispiel einer erfindungsgemäßen Ballenpressrolle darstellen.

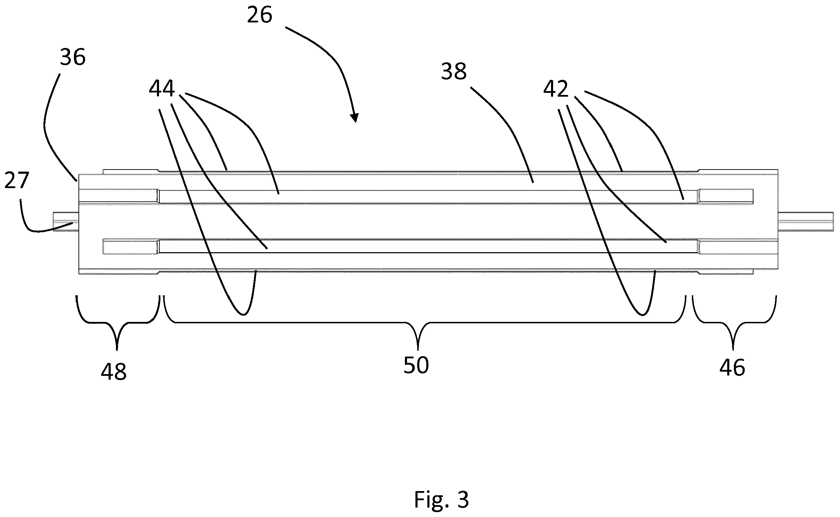

Wie in den Figuren 2 und 3 dargestellt, umfasst die Ballenpressrolle 26 einen Rollenkörper 36, der von einer Mantelfläche 38 in Umfang und Länge umschlossen wird. Der Rollenkörper 36 ist als zylindrisches Rohrprofil ausgebildet und kann beispielsweise aus einem Blechmaterial in einem Umformverfahren bzw. Walzverfahren geformt sein. Der Rollenkörper 36 weist innenseitig an seinen Endbereichen Achsnaben 40, die in das Rohrprofil eingepasst sind und der Halterung bzw. Lagerung der Rotationsachsen 27 dienen.

Auf der Mantelfläche 38 sind Erhebungen 42 ausgebildet, die durch auf der Mantelfläche 30 aufgesetzte streifenförmige Bänder in Form von Blechstreifen 44 gebildet werden. Die Blechstreifen 44 erstrecken sich entlang der Rotationsachse 27 (Längsachse) des Rollenkörpers 36 über im Wesentlichen die gesamte Länge des Rollenkörpers 36 und sind vorzugsweise auf die Mantelfläche 38 aufgeschweißt. Es ist, wie bereits erwähnt, auch möglich, die Erhebungen durch ein Blechumformverfahren (beispielsweise durch ein Prägeverfahren oder Stempelverfahren oder dergleichen) direkt in das Blechmaterial des Rollenkörpers 36 ein zu formen. Die Blechstreifen 44 weisen über die Länge des Rollenkörpers 36 ein sich änderndes Höhenprofil auf, wobei der Rollenkörper 36 stirnseitig Endbereiche 46, 48 aufweist, in denen die Erhebungen 42 stärker ausgeprägt sind (also höher ausgebildet sind) als in einem Bereich 50, der zwischen den Endbereichen 46, 48, des Rollenkörpers 36 liegt. Das heißt, die Blechstreifen 44 bzw. Erhebungen 42 weisen in den Endbereichen 46, 48 des Rollenkörpers 36 eine größere Dicke auf, als in dem zwischen den Endbereichen 46, 48 gelegenen Bereich 50. Die größere Dicke der Blechstreifen 44 bzw. der Erhebungen 42 in den Endbereichen 46, 48 sorgt bei einem Ballenpressvorgang für eine höhere Aggressivität der Ballenpressrollen 26 in den Bereichen nahe den Seitenwänden des Ballenpressraums 20. Es werden demnach von den Endbereichen 44, 46 der Ballenpressrollen 26 bzw. der Rollenkörper 36 stärkere Presskräfte auf einen sich formenden Rundballen ausgeübt, als von dem zwischen den Endbereichen 46, 48 liegenden Bereich 50.

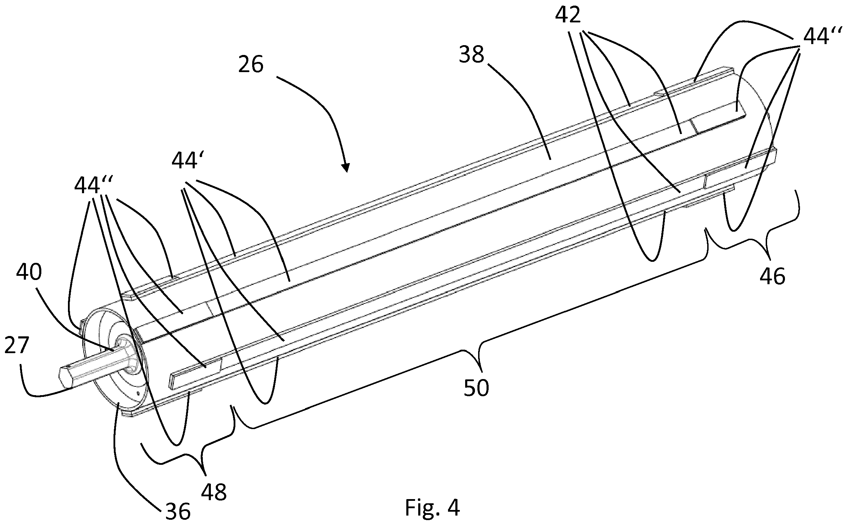

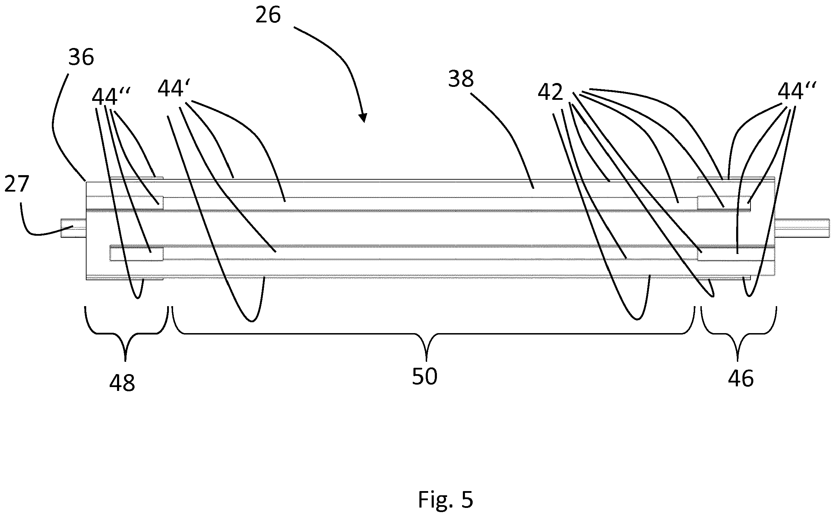

Das in den Figuren 4 und 5 dargestellte Ausführungsbeispiel unterscheidet sich zu dem in den Figuren 2 und 3 gezeigten Ausführungsbeispiel nur dadurch, dass die Erhebungen 42 durch Blechstreifen 44' und 44" gebildet werden, die jeweils ein über ihre Länge konstantes Höhenprofil aufweisen, wobei über die im Wesentlichen gesamte Länge des Rollenkörpers 36 eine erste Lage langer Blechstreifen 44' und in den Endbereichen 46, 48 zusätzlich eine auf die erste Lage aufgebrachte zweite Lage kurzer Blechstreifen 44" aufgebracht ist, so dass auch hier, wie im zuvor genannten Ausführungsbeispiel, die Erhebungen 42 insgesamt in den Endbereichen 46, 48 stärker ausgeprägt sind (also höher ausgebildet sind) als in dem Bereich 50, der zwischen den Endbereichen 46, 48, des Rollenkörpers 36 liegt. Diese Variante erlaubt es beispielsweise, auf einfache und materialsparsame Weise Ballenpressrollen mit bereits vorhandenen konstanten Erhebungen nachzurüsten bzw. zu modifizieren, um so die Erhebungen 42 in den Endbereichen 46, 48 des Rollenkörpers 36 zu erhöhen bzw. stärker auszuprägen.

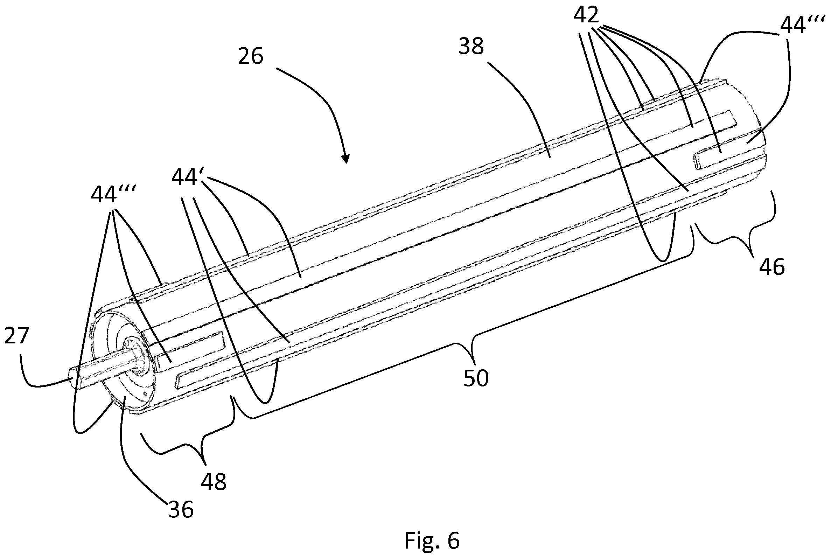

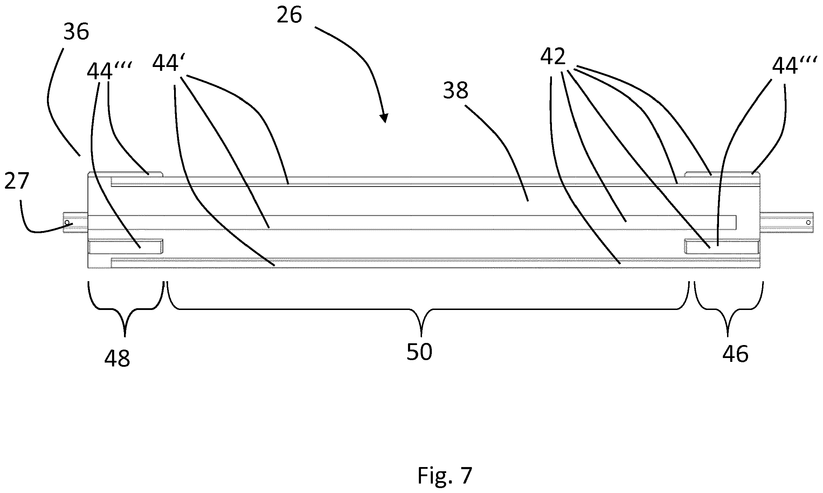

Das in den Figuren 6 und 7 dargestellte Ausführungsbeispiel zeigt eine weitere Variante, die sich insbesondere zu den Varianten der beiden vorherigen Ausführungsbeispiele dadurch unterscheidet, dass die Erhebungen 42 durch Blechstreifen 44' und 44''' gebildet werden, die in den Endbereichen 46, 48 in Umfangsrichtung nebeneinander angeordnet sind. Dabei sind über eine im Wesentlichen gesamte Länge des Rollenkörpers 36 lange Blechstreifen 44' mit konstantem Höhenprofil und in den Endbereichen 46, 48 zusätzlich kurze Blechstreifen 44''' in Umfangsrichtung neben den langen Blechstreifen 44' angeordnet, wobei die kurzen Blechstreifen 44''' ebenfalls ein konstantes Höhenprofil jedoch eine größere Dicke aufweisen, so dass auch hier, wie in den anderen beiden zuvor genannten Ausführungsbeispielen, die Erhebungen 42 in den Endbereichen 46, 48 stärker ausgeprägt sind (also höher ausgebildet sind) als in dem Bereich 50, der zwischen den Endbereichen 46, 48, des Rollenkörpers 36 liegt. Auch diese Variante erlaubt es beispielsweise, auf einfache und materialsparsame Weise Ballenpressrollen mit bereits vorhandenen konstanten Erhebungen nachzurüsten bzw. zu modifizieren, um so die Erhebungen 42 in den Endbereichen 46, 48 des Rollenkörpers 36 zu erhöhen bzw. stärker auszuprägen.

## Patentansprüche

1. Landwirtschaftliche Rundballenpresse (10) mit einer Ballenpresskammer (20) mit Ballenpressrollen (26), wobei wenigstens eine der Ballenpressrollen (26) einen Rollenkörper (36) mit einer Mantelfläche (38), die den Umfang und die Länge des Rollenkörpers (36) umschließt, und mehrere sich radial erstreckende Erhebungen (42) umfasst, die auf der Mantelfläche (38) über den Umfang und die Länge des Rollenkörpers (36) angeordnet sind, **dadurch gekennzeichnet, dass** die Erhebungen (42) auf der Mantelfläche (38) an stirnseitigen Endbereichen (46, 48) des Rollenkörpers (36) eine größere radiale Erstreckung aufweisen als in einem zwischen den Endbereichen (46, 48) liegenden Bereich (50) des Rollenkörpers (36).

2. Landwirtschaftliche Rundballenpresse (10) nach Anspruch 1, **dadurch gekennzeichnet, dass** die Erhebungen (42) durch streifenförmige Bänder (44, 44', 44", 44''') ausgebildet sind.

3. Landwirtschaftliche Rundballenpresse (10) nach Anspruch 2, **dadurch gekennzeichnet, dass** die Bänder (44, 44''') an den seitlichen Endbereichen (46, 48) des Rollenkörpers (36) eine größere Dicke aufweisen als in dem zwischen den Endbereichen liegenden Bereich (50) des Rollenkörpers (36).

4. Landwirtschaftliche Rundballenpresse (10) nach Anspruch 2, **dadurch gekennzeichnet, dass** die Bänder (44', 44") an den seitlichen Endbereichen (46, 48) des Rollenkörpers (36) übereinander liegend ausgebildet sind.

## Claims

1. Agricultural round baler (10) having a baling chamber (20) with baling rollers (26), wherein at least one of the baling rollers (26) has a roller body (36) having a lateral surface (38) which encloses the circumference and the length of the roller body (36), and comprises a plurality of radially extending elevations (42) which are arranged on the lateral surface (38) over the circumference and the length of the roller body (36), **characterized in that** the elevations (42) on the lateral surface (38) have a greater radial extent at end-side end areas (46, 48) of the roller body (36) than in an area (50) lying between the end areas (46, 48) of the roller body (36).

2. Agricultural round baler (10) according to Claim 1, **characterized in that** the elevations (42) are formed by strip-shaped bands (44, 44', 44", 44''').

3. Agricultural round baler (10) according to Claim 2, **characterized in that** the bands (44, 44''') have a greater thickness at the lateral end areas (46, 48) of the roller body (36) than in the area (50) lying between the end areas of the roller body (36).

4. Agricultural round baler (10) according to Claim 2, **characterized in that** the bands (44', 44") are formed lying one above another at the lateral end areas (46, 48) of the roller body (36).

## Revendications

1. Presse à balles rondes agricole (10) comprenant une chambre de presse à balles (20) avec des rouleaux de presse à balles (26), au moins l'un des rouleaux de presse à balles (26) comprenant un corps de rouleau (36) avec une surface d'enveloppe (38) qui entoure la périphérie et la longueur du corps de rouleau (36), et plusieurs rehaussements (42) s'étendant radialement, qui sont disposés sur la surface d'enveloppe (38) sur la périphérie et sur la longueur du corps de rouleau (36), **caractérisée en ce que** les rehaussements (42) sur la surface d'enveloppe (38), au niveau de régions d'extrémités frontales (46, 48) du corps de rouleau (36), présentent une plus grande étendue radiale que dans une région (50) du corps de rouleau (36) située entre les régions d'extrémité (46, 48).

2. Presse à balles rondes agricole (10) selon la revendication 1, **caractérisée en ce que** les rehaussements (42) sont réalisés par des bandes en forme de ruban (44, 44', 44", 44''').

3. Presse à balles rondes agricole (10) selon la revendication 2, **caractérisée en ce que** les bandes (44, 44''') présentent, au niveau des régions d'extrémités latérales (46, 48) du corps de rouleau (36), une plus grande épaisseur que dans la région (50) du corps de rouleau (36) située entre les régions d'extrémités.

4. Presse à balles rondes agricole (10) selon la revendication 2, **caractérisée en ce que** les bandes (44', 44'') sont réalisées de manière superposée au niveau des régions d'extrémités latérales (46, 48) du corps de rouleau (36).
